(19) Europäisches Patentamt
European Patent Office
Office européen des brevets

(11) **EP 2 933 470 A1**

(12) **EUROPEAN PATENT APPLICATION**
published in accordance with Art. 153(4) EPC

(43) Date of publication:
**21.10.2015 Bulletin 2015/43**

(51) Int Cl.:
**F02M 35/12** *(2006.01)*      **F02B 37/00** *(2006.01)*

(21) Application number: **13861818.6**

(86) International application number:
**PCT/JP2013/083425**

(22) Date of filing: **13.12.2013**

(87) International publication number:
**WO 2014/092174 (19.06.2014 Gazette 2014/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.12.2012 JP 2012272308**

(71) Applicants:
• **Alphatech CO., LTD.**
**Tokyo105-0014 (JP)**
• **Mitsubishi Heavy Industries, Ltd.**
**Tokyo 108-8215 (JP)**

(72) Inventors:
• **KOSAKA Teruo**
**Yokohama-shi**
**Kanagawa 232-0061 (JP)**

• **TAIRA Daiki**
**Tama-shi**
**Tokyo 206-0034 (JP)**
• **ISHIDA Naoki**
**Tokyo 132-0031 (JP)**
• **SAKAMOTO Koichi**
**Tokyo 108-8215 (JP)**
• **HIRATANI Fumito**
**Tokyo 108-8215 (JP)**

(74) Representative: **Wilson, Peter**
**Murgitroyd & Company**
**Scotland House**
**165-169 Scotland Street**
**Glasgow G5 8PL (GB)**

(54) **SILENCER FOR SUPERCHARGER AND SUPERCHARGER USING THIS SILENCER**

(57)     [Problem] To provide: a silencer for a supercharger, that has optimal cost reduction and good improvement in amount of silencing; and a supercharger using this silencer. [Solution] Any sound-absorbing splitter (20) and another sound-absorbing splitter (20) adjacent thereto that are formed in a shape along a site having the same distance interval from an origin in each of a plurality of involute curves having different origins having as the basis therefor a fixed circle having the same center as a central axis (CA) and the same radius. A flow path width (w) being the dimension in the normal direction of the involute curve in a flow path (19) between any sound-absorbing splitter (20) and another sound-absorbing splitter (20) is set to a prescribed constant value suitable for the wavelength of the noise to be silenced.

[Fig. 2]

**Description**

[Technical Field]

The present invention relates to a silencer for a supercharger and a supercharger using this silencer and particular to a silencer for a supercharger suitable for silencing noise generated at an air inlet of a supercharger and a supercharger using this silencer.

[Background Art]

In the past, a supercharger was used in a large diesel engine as a means for forcing air into a cylinder of the engine to improve a performance thereof.

In recent years, this kind of supercharger has increasingly been required to have high pressure ratio and to be highly effective to improve the fuel consumption of a diesel engine and reducing nitroxide (NOx).

To respond to this requirement, a supercharger has increasingly been driven at a higher rotation speed than before.

However, although the required performance (high pressure ratio and high effectiveness) is achieved when a supercharger is driven at a high rotation speed, a harmful effect of increase in a noise level has also been caused.

A source of this noise from a supercharger is a turbine that is rotated by exhaust gas of an engine as a power source and a compressor that is directly connected concentrically to this turbine and that rotates with the turbine in an integrated manner to suction and compress air to supply the air to a cylinder.

A duct (conduit) for exhaust gas flow is connected at an inlet and outlet of the turbine. Noise of the turbine transmitted through this duct can be insulated by winding a soundproofing material around the outside surface of the duct. In addition, noise transmitted through a turbine case storing the turbine can be insulated by covering a cast metal outside surface of this turbine with a soundproofing material. Moreover, noise of a compressor transmitted through a duct connected to an air discharge port (exit) of the compressor for compressed air flow to the side of a cylinder can be insulated by winding a soundproofing material around the outside surface of the duct. Furthermore, noise transmitted through a cast compressor case storing the compressor can be insulated by covering the outside surface of this compressor case with a soundproofing material.

On the other hand, since an air inlet (entrance) of the compressor must be opened so that the compressor can suction air, the aforementioned sound insulation at the air discharge port of the compressor or at the inlet and outlet of the turbine cannot be applied without any change. Therefore, very high-level noise generated at the compressor is transmitted outside through the air inlet unless any measure is taken.

In the past, a supercharger was provided with a silencer for a supercharger to silence noise generated at an air inlet of a compressor.

In applying this silencer for a supercharger to an engine, a suitable performance as described below has been desired.

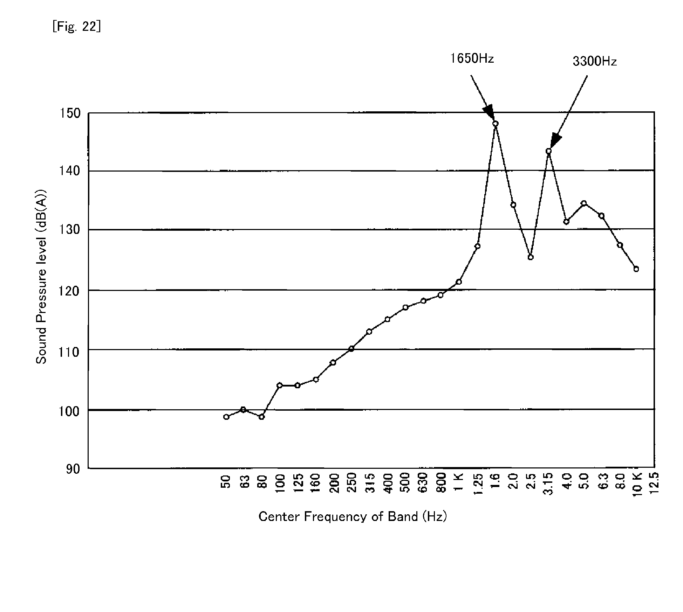

Specifically, noise of a compressor is wind noise generated by the rotation of an impeller of the compressor and is composed mainly of the frequency of a degree component of the number of blades. This noise, for example, is characterized in that, as shown in Fig. 22, a basic frequency of 1650 (3300) Hz calculated by number of blades × number of rotations ÷ 60 (second) and frequency components close to an overtone component of this basic frequency are very high compared to other frequency components. However, in Fig. 22, a basic frequency of 1650 (3300) Hz is calculated on the assumption that the number of blades is 11 (22) and the number of rotations is 9000 rpm. When this noise is emitted from an air inlet of a compressor (supercharger), the level of the noise varies depending on an amount of suctioned air and a discharge pressure, but is approximately 130 to 155 dB (A). Since the noise of the side of an engine using a supercharger is approximately 100 dB (A), the noise from air suction by a supercharger must be reduced to approximately 100 dB (A) from an environmental perspective for an engine.

Therefore, a silencer for a supercharger is required to obtain a high amount of silencing in order to reduce noise of this supercharger.

In addition, to achieve an original purpose of a supercharger including improvement of fuel efficiency of an engine and reduction of NOx and eventually contribution to fuel saving and emission control, a supercharger is desired to be highly efficient (in other words, a high discharge pressure). To improve efficiency of this supercharger, manufacturers of a supercharger in the world compete with each other. In general, it is said that when a pressure loss of an intake side is reduced by 10 mmAq, efficiency of a supercharger is improved by 1 %. A lower pressure loss of a silencer for a supercharger mounted on an intake side is an important factor for improving efficiency of a supercharger.

Therefore, a silencer for a supercharger is required not only to obtain a high amount of silencing, but to have a low pressure loss.

As this silencer for a supercharger, the inventors have so far proposed silencers with a variety of structures. The representative structure of a large silencer for a supercharger is divided into three structures, that is, a cylindrical outer circumference suction silencer, a cylindrical front suction silencer and a square front suction silencer depending on air suction flow.

Specific examples of these three types of a large silencer for a supercharger are explained.

(Cylindrical outer circumference suction silencer)

As disclosed in Patent Gazette 1, a cylindrical outer circumference suction silencer is mounted on an engine while it is directly connected to a supercharger.

In this cylindrical outer circumference suction silencer, air is suctioned from the circumference of a silencer to the center. Then, noise of a supercharger (compressor) is emitted from the center of the silencer to the circumference against this air flow.

A silencing element for silencing this noise is configured by arranging a plurality of Z-shaped plate-like sound-absorbing splitters radially in a circumferential direction at a regular pitch between the inside diameter and the outside diameter of the silencer.

This cylindrical outer circumference suction silencer sends a sound wave with a higher frequency than a basic frequency to a bend portion of a sound-absorbing splitter to silence noise and also ensures an air flow path from the circumference to the center between each sound-absorbing splitter to reduce a pressure loss.

(Cylindrical front suction silencer)

As disclosed in Patent Gazette 2, a cylindrical front suction silencer is configured so as to suction air from the front side (front) of the silencer backward to an axial direction.

In addition, noise of a supercharger is emitted against this air flow from the back of a silencer forward in an axial direction, specifically to the front side (front).

A silencing element for silencing this noise is configured by arranging concentrically a plurality of cylindrical sound-absorbing cylinders with the center in an axial direction curved in a radial direction.

This cylindrical front suction silencer sends a sound wave to a curved part of a sound-absorbing cylinder to obtain a large amount of silencing and secures an air flow path in an axial direction axially between each sound-absorbing cylinder to reduce a pressure loss.

(Square front suction silencer)

As disclosed in Non-Patent Document 1, a square front suction silencer, like a cylindrical front suction silencer, is configured so as to suction air from the front side of a silencer backward to an axial direction.

In addition, like a cylindrical front suction silencer, noise of a supercharger is emitted against this air suction flow from the back of a silencer forward in an axial direction.

A silencing element for silencing this noise is configured by arranging a plurality of plate-like sound-absorbing boards at a regular pitch in a direction perpendicular to an axial direction.

This square front suction silencer obtain a prescribed amount of silencing by extending the length of a silencing element in an axial direction depending on a required amount of silencing and also secures an air flow path in an axial direction between each sound-absorbing board to reduce a pressure loss.

[Citation List]

Patent Gazette

Patent Gazette 1: JP-A-2004-360547
Patent Gazette 2: JP-A-2002-004964

Non-Patent Document

Non-Patent Document: http: //www.alpt.co.jp/products/s_charger.html

[Disclosure of Invention]

[Problem to be solved by the Invention]

Each of the three types of silencers mentioned above meets required performance, but has a unique characteristic (an advantage and disadvantage) as mentioned below.

(Cylindrical outer circumference suction silencer)

A cylindrical outer circumference suction silencer is excellent in mass productivity because the size of a plurality of sound-absorbing splitters can be the same. The cost of a cylindrical outer circumference suction silencer is the lowest of the three types of silencers.

On the other hand, because of the constitution of a cylindrical outer circumference suction silencer, the outside diameter (do) must be almost the same as the outside diameter of a supercharger and the inside diameter (di) is unambiguously determined by the diameter of the interface of a supercharger. Therefore, a silencing element has to be arranged in this limited space. Since the length of the path of a silencing element is limited to $\{(do-di) \div 2\}$, there is a limit to increasing an amount of silencing.

(Cylindrical front suction silencer)

A cylindrical front suction silencer was originally developed to eliminate the weak point of a cylindrical outer circumference suction silencer and is better in securing an amount of silencing than a cylindrical outer circumference suction silencer. Specifically, a cylindrical front suction silencer can easily secure a required amount of silencing by adjusting the length in an axial direction of a sound-absorbing cylinder.

On the other hand, since a case of a cylindrical front suction silencer has a larger surface area than a case of a cylindrical outer circumference suction silencer, a soundproofing material must be wound around the outside surface of the case in order to insulate noise that transmits from this case. In addition, since each diameter of sound-absorbing cylinders of a cylindrical front suction silencer must be changed, volume production is difficult and costs high.

(Square front suction silencer)

A square front suction silencer has been developed to eliminate disadvantages of the two types of silencers mentioned above, and obtains a larger amount of silencing than a cylindrical outer circumference suction silencer and is more cost-effective than a cylindrical front suction silencer.

However, like a cylindrical front suction silencer, to insulate noise transmitted from a case of a square front suction silencer, a soundproofing material has to be wounded around the outside surface of the case.

The inventors take into consideration the characteristics of the three types of silencers mentioned above and focus attention on the lowest cost of a cylindrical outer circumference suction silencer. While taking advantage of the low cost of a cylindrical outer circumference suction silencer, to overcome difficulty in increasing an amount of silencing of which a cylindrical outer circumference suction silencer has a disadvantage, the inventors aim to provide a silencer for a supercharger having optimal cost reduction and go improvement in an amount of silencing, and a supercharger using this silencer.

[Means for Solving Problem]

To achieve the object mentioned above, the silencer for a supercharger of the present invention is characterized in that a silencer for a supercharger is attached to an air inlet through which air is suctioned by a compressor provided in a supercharger and silences noise generated by the compressor at the time of suctioning air, wherein a plurality of plate-like sound-absorbing splitters are arranged along the inner circumference of the air inlet in a circumferential direction having a prescribed central axis as the center with each gap provided in a radial direction, to suction the air with each of the gaps as a flow path from outwardly to inwardly in the radial direction and to absorb the noise emitted from inwardly to outwardly in the radial direction against the air flow in the plurality of sound-absorbing splitters, wherein any of the sound-absorbing splitters and another sound-absorbing splitter adjacent thereto in the circumferential direction are formed in a shape along a site having the same distance interval from an origin in each of a plurality of involute curves having different origins having as the basis thereof a fixed circle having the same center and the same radius as the central axis, and wherein a flow path width being the dimension in the normal direction of the involute curve between any of the sound-absorbing splitters and another sound-absorbing splitter adjacent thereto in the circumferential direction in the flow path is set to a prescribed constant value suitable for the wavelength of the noise to be silenced.

By adopting this structure, in a low-cost cylindrical outer circumference suction silencer, by using a sound-absorbing splitter in a shape along an involute curve, a flow path width between adjacent sound-absorbing splitters is kept constant without changing the thickness of a sound-absorbing splitter. By adjusting this flow path width to be suitable for the wavelength of the noise to be silenced, an amount of silencing is increased effectively while a space for mounting a sound-absorbing splitter is limited in a radial direction. For example, when a basic frequency of noise is 1650 Hz, the wavelength thereof is sound speed 340 (m/s) ÷ frequency 1650 (Hz) = 20.6 cm. In addition, for the overtone of the basic frequency of 3300 Hz, the wavelength thereof is sound speed 340 (m/s) ÷ frequency 3300 (Hz) = 10.3 cm. When a flow path width is adjusted to be suitable for this wavelength, the noise of the basic frequency of 1650 Hz and the overtone of the basic frequency of 3300 Hz is silenced efficiently.

The silencer for a supercharger of the present invention is also characterized in that any of the sound-absorbing splitter and another sound-absorbing splitter adjacent thereto in the circumferential direction is formed in a shape on the basis of the pair of involute curves, as the plurality of involute curves, applicable to any of the plurality of patterns of the pair of involute curves having the same radius and/or having different intervals from the different origins and by allocating all of the plurality of patterns to a shape of any pair of sound-absorbing splitters adjacent to each other of the plurality of sound-absorbing splitters, a flow path having the prescribed flow path width corresponding to each of the plurality of patterns is selectively arranged in accordance with a position in the circumferential direction.

By adopting this structure, it is possible to change the suitable wavelength of noise in accordance with a flow path, and by flexibly responding to the change of the wavelength of the noise to be silenced due to the fluctuation of the rotation speed of a compressor (for example, the change of the wavelength corresponding to a basic frequency along with the change of the basic frequency), to maintain a large amount of silencing stably.

The silencer for a supercharger of the present invention is further characterized in that any of the sound-absorbing splitters and another sound-absorbing splitter adjacent thereto in the circumferential direction are each formed into a shape along a compound curve portion linking some portions of a plurality of involute curves in the normal or reverse involute direction on the basis of a fixed circle having the same center in a normal direction or in a reverse direction.

By adopting this structure, it is easier for a sound wave of noise traveling a flow path against an air flow to be sent to a sound-absorbing splitter, a sound-absorbing splitter can absorb noise efficiently to further increase an amount of silencing.

The silencer for a supercharger of the present invention is also characterized in that the constant value is 1/2 of the wavelength of the noise to be silenced.

By adopting this structure, a flow path width can be adjusted to an optimal value to the wavelength of the noise to be silenced to achieve one of the most effective silencing.

The silencer for a supercharger of the present invention is also characterized in that the array pitch of the sound-absorbing splitter is set at a value suitable for the wavelength of the noise to be silenced.

By adopting this structure, by adjusting the array pitch of a sound-absorbing splitter to be suitable for the wavelength of the noise to be silenced, an amount of silencing is further increased.

The silencer for a supercharger of the present invention is also characterized in that the dimension of the array pitch is the same as the wavelength of the noise to be silenced.

By adopting this structure, an array pitch of a sound-absorbing splitter can be adjusted to the optimal value for the wavelength of the noise to be silenced to achieve one of the most effective silencing.

The silencer for a supercharger of the present invention is also characterized in that the wavelength of the noise to be silenced corresponds to a basic frequency of the noise.

By adopting this structure, since noise of a basic frequency with the highest noise level is silenced effectively, a performance required for a silencer for a supercharger is delivered definitely.

The supercharger of the present invention is characterized in that the supercharger has a silencer for a supercharger, wherein a plurality of sound-absorbing splitters are arranged along the inner circumference of an air inlet radially with each interval set in a circumferential direction having a prescribed central axis as the center, having an origin having as the basis therefor a fixed circle having the same center as the central axis, and formed along an involute curve, and wherein a flow path width formed by sound-absorbing splitters adjacent in the circumferential direction is set at a prescribed width suitable for the wavelength of the noise to be silenced.

By adopting this structure, while a space for mounting a sound-absorbing splitter is limited in the radial direction, a supercharger effectively increasing an amount of silencing is provided.

[Effect of the Invention]

According to the present invention, a silencer for a supercharger having optimal cost reduction and good improvement in an amount of silencing and a supercharger using this silencer can be achieved.

[Brief Description of Drawings]

Fig. 1 is a block diagram showing a vertical section of a silencer for a supercharger along with a portion of a supercharger in the first embodiment of the silencer for a supercharger of the present invention.

Fig. 2 is a cross-section view of the front portion of a silencing element in the first embodiment in Fig. 1.

Fig. 3 shows an involute curve for defining a shape of a sound-absorbing splitter in the first embodiment in Fig. 1.

Fig. 4 is a first explanatory illustration for explaining the principle of an involute curve.

Fig. 5 is a second explanatory illustration for explaining the principle of an involute curve.

Fig. 6 is an enlarged view showing an example of a specific structure of a sound-absorbing splitter.

Fig. 7 is an enlarged view showing another example of a specific structure of a sound-absorbing splitter.

Fig. 8 shows an involute curve corresponding to a variation of a sound-absorbing splitter in the first embodiment in Fig. 1.

Fig. 9 shows involute curves for defining a shape of a sound-absorbing splitter in a second embodiment of the silencer for a supercharger of the present invention.

Fig. 10 is a schematic block diagram of a silencing element in the second embodiment in Fig. 9.

Fig. 11 is a schematic view showing a first specific structure of a silencing element in the third embodiment of the silencer for a supercharger of the present invention.

Fig. 12 is a schematic view showing a second specific structure of a silencing element in the third embodiment in Fig. 11.

Fig. 13 shows an involute curve for defining a shape of a sound-absorbing splitter in the structure in Fig. 11.

Fig. 14 shows a compound curve portion composed of a plurality of involute curves for defining a shape of a sound-absorbing splitter in the structure in Fig. 12.

Fig. 15 shows each involute curve as the basis of a compound curve portion in Fig. 14.

Fig. 16 is a schematic block diagram showing a silencing element of a silencer for a supercharger in the comparative example used for explanation in the third embodiment.

Fig. 17 is a composite graph showing a noise characteristic of a silencer for a supercharger in the comparative example used for explanation in the third embodiment.

Fig. 18 is a graph showing a silencing characteristic of a silencing element alone in the comparative element used for explanation in the third embodiment.

Fig. 19 is a schematic block diagram of a silencing element in the third embodiment.

Fig. 20 is a composite graph showing a noise characteristic of a silencer for a supercharger in the example of the third embodiment.

Fig. 21 is a graph showing a silencing characteristic of a silencing element alone in the example of the third embodiment.

Fig. 22 is a graph showing noise generated within a supercharger.

[Description of Embodiments]

(First embodiment)

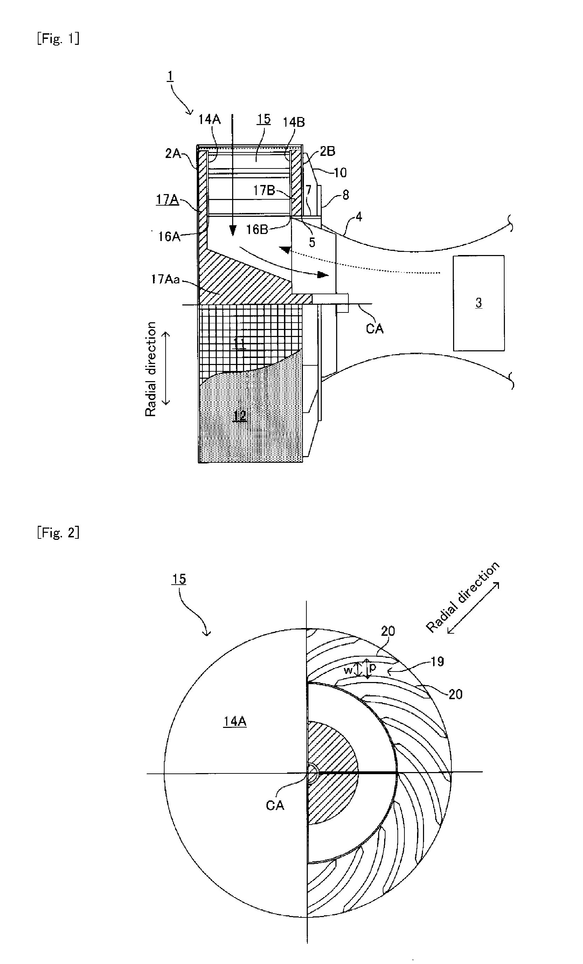

The silencer of a supercharger of the present invention in a first embodiment is explained by referring to Figs. 1 to 8.

As shown in Fig. 1, a silencer for a supercharger 1 in this embodiment is mounted at an air inlet 4 through which suction of air is performed by a compressor 3 provided in the a supercharger and is configured so as to silence noise generated by the compressor 3 at the time of the suction of air. However, the noise silenced by the silencer for a supercharger 1 does not prevent inclusion of noise by a turbine not illustrated. In addition, the silencer for a supercharger 1 in this embodiment is a cylindrical outer circumference suction silencer mentioned above.

To be more precise, as shown in Fig. 1, the silencer for a supercharger 1 has two outer discs 2A and 2B arranged in parallel with each other with an interval in a horizontal direction in Fig. 1. Each of these outer discs 2A and 2B has the same outside diameter. It is desirable that these outer discs 2A and 2B are formed by strong steel to insulate noise by the compressor 3. Of these outer discs 2A and 2B, at the center of the outer disc 2B arranged on the side of an air inlet 4 (right in Fig. 1), a circular hole 5 with a relatively large diameter is drilled concentrically. In addition, a cylindrical body 7 is extending at an end of an inner circumference of the outer disc 2B to the side of an air inlet 4 and a flange 8 extending radially outwardly is provided around a tip of this cylindrical body 7. From this flange 8, to the cylindrical body 7 and the outer disc 2B, multiple radiate stiffeners 10, 10··· are fixed and as a result, the outer disc 2B and the cylindrical body 7 are strongly integrated.

In addition, as shown in Fig. 1, a wire netting 11 and a filter 12 removing dust from air are wound starting from an inside of a radial direction between outer circumferential edges of both the outer discs 2A and 2B mentioned above.

In addition, as shown in Fig. 1, inside both the two outer discs 2A and 2B, a silencing element 15 having two inner discs 14A and 14B is arranged so that the silencing element faces each of the outer discs 2A and 2B from inside. Circular holes 16A and 16B having the same inside diameter and the same center as the circular hole 5 of the outer disc 2B are drilled on each of the inner discs 14A and 14B. In addition, in Fig. 1, between the outer disc 2B on the right (on the side of the air inlet 4) and the inner disc 14B facing the outer disc 2B and between the outer disc 2A on the left and the inner disc 14A facing the outer disc 2A, sound absorbing bodies 17A and 17B for vibration and sound insulation are interposed, respectively.

These sound absorbing bodies 17A and 17B may house a net-like or non-woven fabric-like sound absorbing material not illustrated made of material including glass wool inside the surface covered by a punching plate made of metal including aluminum. Of these sound absorbing bodies 17A and 17B, the sound absorbing body 17B arranged between the discs 2B and 14B on the right in Fig. 1 is extending to the end of the inner circumference of both the discs 2B and 14B, forming a disc-shape as a whole.

On the other hand, a sound absorbing body 17A arranged between the discs 2A and 14A on the left in Fig. 1 is extending beyond the end of the inner circumference of the inner disc 14A to the center side of the outer disc 2A. To be more precise, a portion 17Aa extending to the center side of the outer disc 2A of the sound absorbing body 17A constitutes a tapered almost cone-shape portion 17Aa projecting to the side of the circular hole 5. The tip of this corn-shaped portion 17Aa reaches into the circular hole 5. The circumference surface of this corn-shaped portion 17Aa is formed in a corn-shape to introduce air suctioned into the silencer for a supercharger 1 with a small pressure loss to the side of the air inlet 4. In addition, the corn-shaped portion 17Aa is responsible for silencing noise by the compressor 3 coming from the side of the air inlet 4.

As shown in Fig. 2, the silencing element 15 has a plurality of plate-like sound-absorbing splitters 20, 20··· having a sound-absorbing function fixed between the two inner discs 14A and 14B mentioned above. Each sound-absorbing splitter 20 is arranged along the inner circumference of the air inlet 4 radially with each interval having a constant dimension provided in a circumferential direction having a prescribed central axis (CA) as the center.

As a result, air is suctioned from outwardly to inwardly in the axial direction of the flow path 19 that is a gap of each pair of sound-absorbing splitter 20, 20 and noise emitted against the flow of the air from inwardly to outwardly is silenced by being absorbed by each sound-absorbing splitter 20.

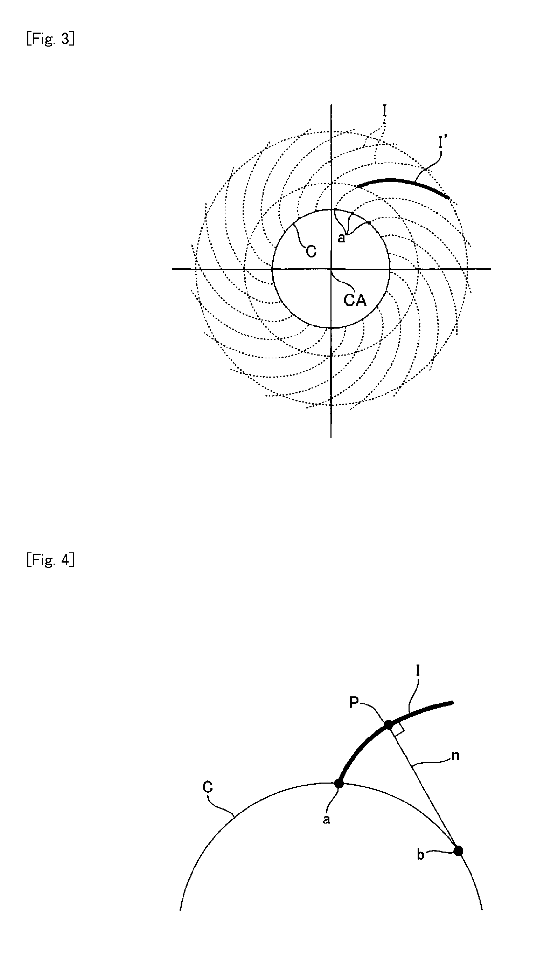

In this embodiment, any of the sound-absorbing splitters 20 and another sound-absorbing splitters 20 adjacent thereto at both of the circumferential directions, as shown in Fig. 3, are formed in a bent plate-like shape along a site I' having the same distance interval from an origin of each of a plurality of involute curves I having different origins (in other words, starting points) a having as the basis thereof a fixed circle C having the same center and the same radius as a central axis (CA). In addition, as shown in Fig. 2, the flow path width w that is a dimension in the normal line of the involute curve I in the flow path 19 between each pair of any of the sound-absorbing splitters 20, 20 composed of any sound-absorbing splitters 20 and another sound-absorbing splitters 20 adjacent thereto is set at 1/2 of a wavelength as a prescribed constant value suitable for the wavelength of the noise to be silenced. It is desirable that the wavelength λ of the noise to be silenced is desired to be a wavelength c/F (c represents sound speed) corresponding to a basic frequency F with the highest noise level. In addition, it is desirable that the thickness (width) t of a sound-absorbing splitter 20 equals to the flow path width w (w=t) when a flow path width w is set at (1/2) λ as mentioned above.

The involute curve I, as shown in Fig. 4, is a plane curve, the normal line n thereof being constantly tangent to one fixed circle C, and is also called the involute of circle or anti-clothoid. This involute curve I is obtained as a locus that the tip of a tread draws when the thread wound around the fixed circle C is undone while the thread is being pulled straight without rotating the fixed circle C.

As shown in Fig. 4, the center of curvature of any point P on the involute curve I is a tangent point b of the normal line n and the fixed circle C at this point P, the distance between this P and b is the radius of curvature of the involute curve I at the point P. Of course, a radius of curvature and a center of curvature vary depending on a point P.

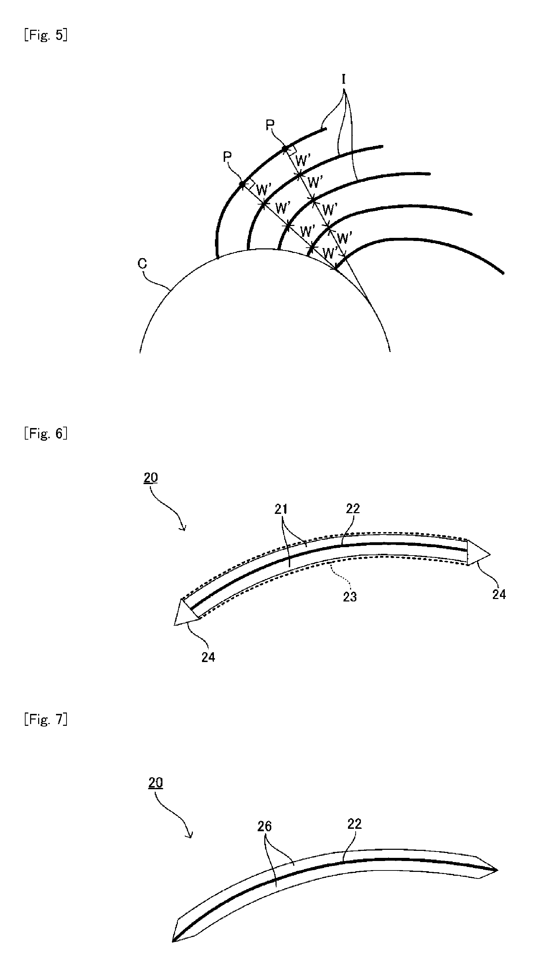

When this involute curve I is repeatedly drawn at a constant pitch on the fixed circle C, a group (involute curve group) of radial involute curves I shown in Fig. 5 is obtained. Then, as shown in Fig. 5, for each involute curve I, the interval w' in the normal line n is found to be constant at any point P.

Therefore, when each sound-absorbing splitter 20 is formed along this involute curve I, a constant flow path width w mentioned above is secured without changing the thickness of each sound-absorbing splitter 20. By forming this flow path width w into a dimension suitable in terms of silencing for the wavelength of the frequency to be silenced, the energy of the sound of the frequency is effectively absorbed into a sound-absorbing splitter 20 and a larger amount of silencing is obtained. For example, when a basic frequency is 1650 Hz, a wave wavelength thereof is sound speed 340 (m/s) ÷ frequency 1650 (Hz) = 20.6 cm. In addition, when the overtone of the basic frequency is 3300 Hz, a wavelength thereof is sound speed 340 (m/s) ÷ frequency 3300 (Hz) = 10.3 cm. When a flow path width w is arranged to be suitable for this wavelength, the basic frequency of 1650 Hz and the overtone of 3300 Hz of this basic frequency are effectively silenced.

In addition, in this embodiment, in a pair of any of the sound-absorbing splitters 20, 20 composed of any sound-absorbing splitter 20 and another sound-absorbing splitters 20 adjacent thereto, an array pitch p (see Fig. 2) is set at the same dimension as a wavelength as a value suitable for the wavelength of the noise to be silenced (for example, the wavelength corresponding to a basic frequency). An array pitch p is equivalent to a value calculated by adding to the thickness t of a sound-absorbing splitter 20 to a flow path width w.

In a specific example of a structure of this sound-absorbing splitter 20, as shown in Fig. 6, a core plate 22 is put at the center portion of a glass wool board 21 made of glass wool fiber processed into an arch shape matched to an involute curve and the surface of a board 21 is covered by an aluminum punching plate 23 in order to prevent the fiber from dispersing by air flow.

In a sound-absorbing splitter 20 in Fig. 6, tips in a longitudinal direction are protected by aluminum extruded material 24 formed into a shape to reduce flow resistance.

In addition, in another specific example of a structure of the sound-absorbing splitter 20, as shown in Fig. 7, a polyester board 26 made of heat-welded soft plate-like polyester fiber is firmly bonded with adhesive on both sides of a core plate 22 like the core plate in Fig. 6. Tips in a longitudinal direction of this sound-absorbing splitter 20 in Fig. 7 are also processed into a shape to reduce flow resistance as in Fig. 6. However, since the sound-absorbing splitter 20 in Fig. 7 is heat-welded polyester fiber, no dispersion by air flow occurs as in the glass wool board 21, protection of the surface is not necessary.

However, a concrete structure of the sound-absorbing splitter 20 is not limited to examples shown in Figs. 6 and 7.

Then, the effect of the structure mentioned above of this embodiment is explained.

As shown with a solid arrow in Fig. 1, air suctioned by the compressor 3 is mostly dispersed into each flow path 19 between each pair of adjacent sound-absorbing splitters 20, 20 of the silencing element 15 when the air is flowed from outwardly (outer circumferential side) in the radial direction of the silencer for a supercharger 1. Then, the air dispersed into each flow path 19 is flowed in each flow path 19 inwardly in the radial direction. Then, since the sound-absorbing splitter 20 that defines the shape of each flow path 19 is formed into a smooth shape along an involute curve, sudden change in direction of air in each flow path 19 is reduced to decrease a pressure loss. Then, the air flowed in each flow path 19 is released from the end of the inner circumference of each sound-absorbing splitter 20 into the center in the silencer for a supercharger 1 outside each flow path 19 and then is suctioned into the side of the air inlet 4, and further is compressed by the compressor 3 and is supplied efficiently to a cylinder of an engine not illustrated.

On the other hand, noise generated by the compressor 3 when air is suctioned is, as shown with a dashed arrow in Fig. 1, flows into the center of the silencer for a supercharger 1 from the side of the air inlet 4 against air flow and is emitted from inwardly to outwardly in a radial direction.

At this time, since each sound-absorbing splitter 20 is formed into a shape along an involute curve, the flow path width w of each flow path 19 is set at a constant value λ/2 suitable for the wavelength λ of the noise to be silenced, without having to change the thickness of each sound-absorbing splitter 20, noise corresponding to the wavelength λ is silenced effectively with a simple structure (see "Machine Noise Handbook (Sangyo Tosho)" P. 506, 1. 10). In addition, then, since the pitch p of each sound-absorbing splitter 20 is set at a constant value λ suitable for the wavelength λ of the noise to be silenced, noise corresponding to the wavelength λ is silenced more effectively. In addition, then, if the wavelength λ is a wavelength corresponding to a basic frequency, an amount of silencing can be increased further.

In addition, a high amount of silencing obtained for noise corresponding to λ by matching a pitch p to λ is described in "Attenuation Characteristic of Sound-absorbing Duct" published in 1975 (Vol. 31, No. 8, The Journal of the Acoustical Society of Japan, Institute of Industrial Science, the University of Tokyo, Teruo Obata, Ken Hirata, Itsuo Onishi, Nishiwaki Jin-ichi).

Therefore, according to this embodiment, since in a low-cost cylindrical outer circumference suction silencer 1, by using a sound-absorbing splitter 20 in a shape along an involute curve, a flow path width 19 between a pair of adjacent sound-absorbing splitters 20, 20 is kept constant easily, by adjusting this flow path width 19 to the wavelength of the noise to be silenced, an amount of silencing is increased effectively while a space for mounting a sound-absorbing splitter 20 is limited in the radial direction.

In addition, a supercharger using the silencer for a supercharger 1 of this embodiment is made smaller and can achieve a high pressure ratio and high efficiency in quiet operation despite a high rotation speed.

The radius of a fixed circle C defining an involute curve I may be changed appropriately according to a desired amount of silencing. For example, in a structure shown in Fig. 3, when only the radius of a fixed circle C is changed to a smaller radius, the curvature of the involute curve I becomes larger and a distance interval w' of a pair of adjacent involute curves I, I becomes smaller and also the length of a site I' at a constant distance from an origin a becomes longer. Then, since when this shape is reflected in a sound-absorbing splitter 20, a flow path 19 with a smaller flow path width w, in other words, with a smaller cross-section area and with a longer flow path, is obtained, an amount of silencing is further increased. This is obvious from a calculation formula for an amount of silencing described in "Attenuation Characteristic of Sound-absorbing Duct" mentioned above, that is, R=K × (P ÷ S) × L. R: Sound absorption (dB) obtained between a flow path of sound-absorbing boards, K: Coefficient of an amount of silencing, P: Circumference of sound-absorbing surface in a cross-section of flow path (m), S: Cross-section area of a flow path ($m^3$), L: length of flow path (m).

In addition, the number of sound-absorbing splitters 20 may be changed appropriately according to a desired amount of silencing. For example, in the structure shown in Fig. 2, when only the number of the sound-absorbing splitters 20 is increased, an amount of silencing is increased because a flow path width w becomes smaller.

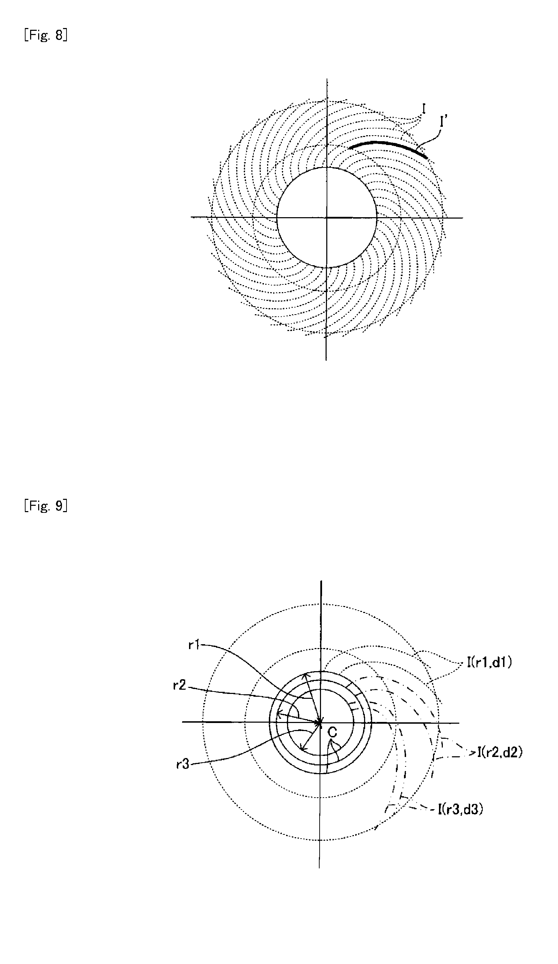

Fig. 8 shows an involute curve group that defines the shape of each sound-absorbing splitter 20 in this case.

(Second embodiment)

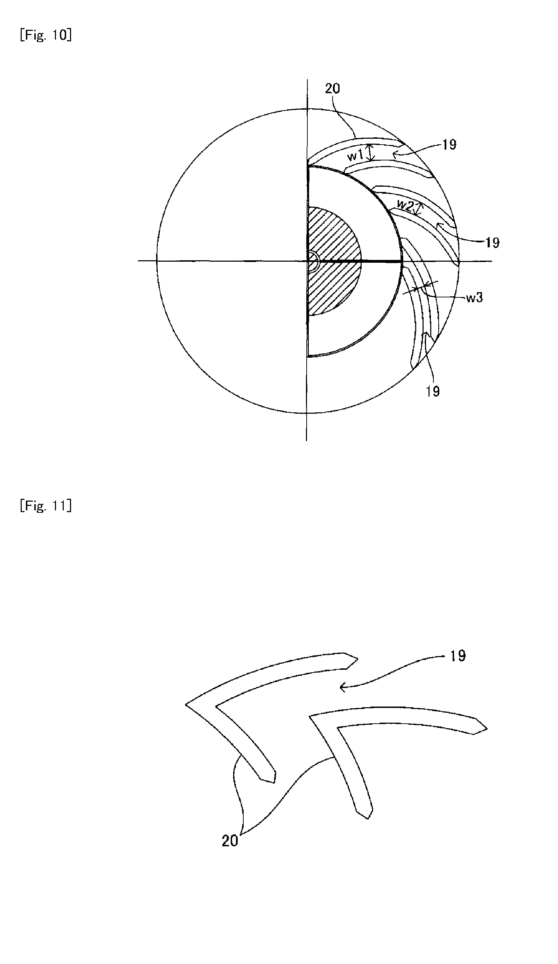

Then, a second embodiment of a silencer for a supercharge 1 is illustrated by referring to Figs. 9 and 10.

In the silencer for a supercharger 1 in this embodiment, as in the first embodiment, a flow path width w of a flow path 19 between a pair of adjacent sound-absorbing splitters 20, 20 is a constant value in the flow path 19.

However, in this embodiment, like the first embodiment, in all pairs of adjacent sound-absorbing splitters 20, 20 each flow path width w of the flow path 19 is not set at an equal value.

Specifically, in this embodiment, any sound-absorbing splitter 20 and another sound-absorbing splitter 20 adjacent thereto are formed in a shape, as shown in Fig. 9, on the basis of a pair of involute curves corresponding to any of a plurality of patterns of a pair of involute curves I (ri, di) (i: one to multiple patterns) having a radius (the same radius) ri of a fixed circle C and having different degree intervals di between each different origin a.

For convenient sake, three patterns are indicated in Fig. 9, there is no need to limit to these patterns. In addition, in each of the patterns, either the radius ri of a fixed circle C or the degree interval di between each different origins a may be the same.

In this embodiment, all of the plurality of patterns are allocated to a shape of any of the sound-absorbing splitters 20 adjacent to each other of a plurality of sound-absorbing splitters 20, so that, as shown in Fig. 10, flow paths 19 having a constant flow path width w1, w2, w3 different from earth other corresponding to each of a plurality of patterns are arranged selectively according to a position in a circumferential direction.

In Fig. 10, for convenient sake, the interval of each of the three flow paths w1, w2, and w3 is relatively large, but from the standpoint of ensuring an amount of silencing, each interval between flow path w1, w2, and w3 may be made as small as possible.

Based on this structure, a wavelength of suitable noise is changed according to a flow path 19, and by responding flexibly to the change of a wavelength of the noise to be silenced due to change in a rotation speed of the compressor 3 (for example, change in a wavelength corresponding to a basic frequency along with change in the basic frequency), a high amount of silencing is stably maintained.

(Third Embodiment)

Then, a silencer for a supercharger 1 in a third embodiment is explained by referring to Figs. 11 to 21.

In this embodiment, any sound-absorbing splitter 20 and another sound-absorbing splitter 20 adjacent thereto are each formed in a shape along a compound curve portion wherein a portion of a plurality of involute curves in a normal direction (the same direction) or in a reverse direction (opposite direction) having as the basis thereof a fixed circle having the same center are connected. However, a basic structure wherein sound-absorbing splitters 20 adjacent to each other are formed in a shape along a site having the same distance interval from an origin in each of a plurality of involute curves having the same center and having the same radius but having different origins is the same as in each embodiment mentioned above.

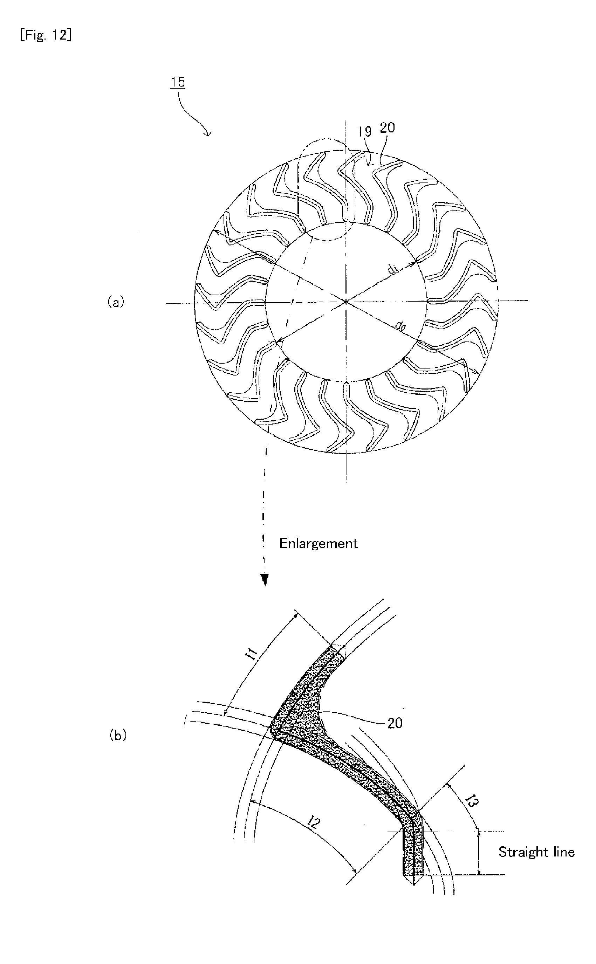

As a specific structure of this embodiment, for example, as shown in Fig. 11, sound-absorbing splitters 20 and flow paths 19 are formed in a dogleg shape and as shown in an overall view in Fig. 12 (a) and an enlarged view of a main part in 12 (b), sound-absorbing splitters 20 and flow paths 19 are formed almost in an S-shaped form.

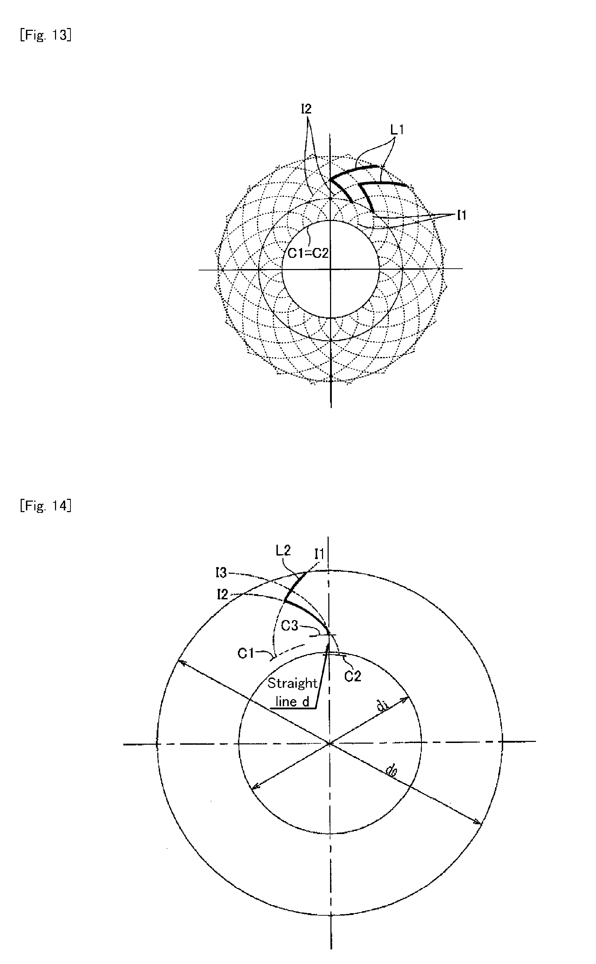

The structure in Fig. 11 is, as shown in Fig. 13, based on curve portions L1 wherein portions of two involute curves 11, 12 in opposite involute directions (direction of undoing a string) as the basis thereof fixed circles C1, C2 having the same center as a compound curve portion is connected. As shown in Fig. 13, fixed circles C1, C2 are the same (in other words, having the same center and the same radius or involute curves I1, I2 having the same curvature), and each interval between origins of two involute curves I1, I2 may be the same. However, there is no need to limit to this construction and each radius of fixed circles C1, C2 may be different.

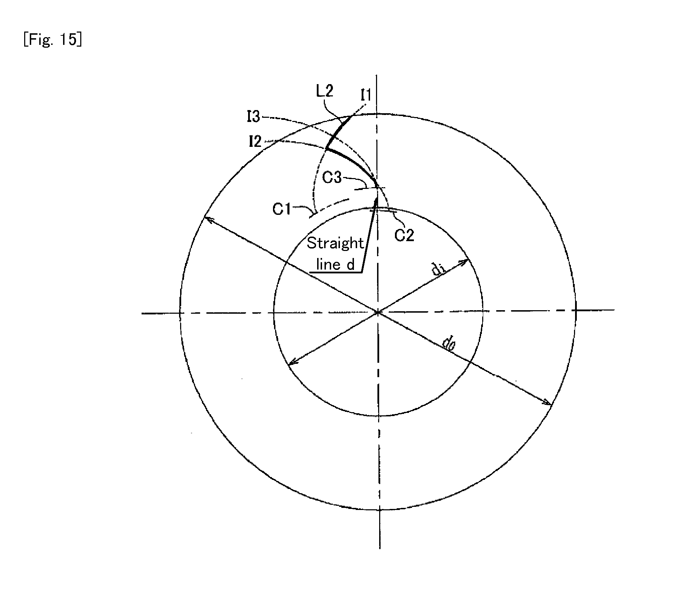

On the other hand, the structure in Fig. 12 is, as shown in Figs. 14 and 15, based on a curve portion L2 wherein portions of three involute curves I1, I2, I3 in a normal or reverse involute direction having as the basis thereof fixed circles C 1, C 2, C 3 (C 2 <C 1 <C 3) having the same center but having different radius as a compound curve portion are connected. However, as shown in Fig. 12 (b), a sound-absorbing splitter 20 is based on a linear shape articulated to an inner end of an involute curve I3 parallel in a radial direction.

Fig. 15 shows each of the involute curves I1, I2, I3 that are the basis of the compound curve portion in Fig. 14. In addition, in Figs. 14 and 15, di is a diameter, as an inside diameter, of a sound-absorbing splitter 20, r1, r2, r3 in 15 is a radius of fixed circles (C1, C 2, C 3) corresponding to each involute curve I (I1, I2, I3), and in Fig. 14, do is a diameter, as an outside diameter, of a sound-absorbing splitter 20.

As is seen from Fig. 15, the involute curves I2 and I3 have the same involute direction while the involute curve I2 (or I3) and I1 have opposite involute directions.

According to this construction of the third embodiment, since a sound wave of noise traveling in a flow path 19 against air flow suctioned by the compressor 3 becomes easier to be sent to a sound-absorbing splitter 20, the sound-absorbing splitter 20 absorbs noise efficiently and an amount of silencing is further increased.

Then, the silencing effect is explained by comparing an example (Example) of the silencer for a supercharger 1 in this embodiment with an example (comparative example) of a conventional silencer for a supercharger.

[Comparative example]

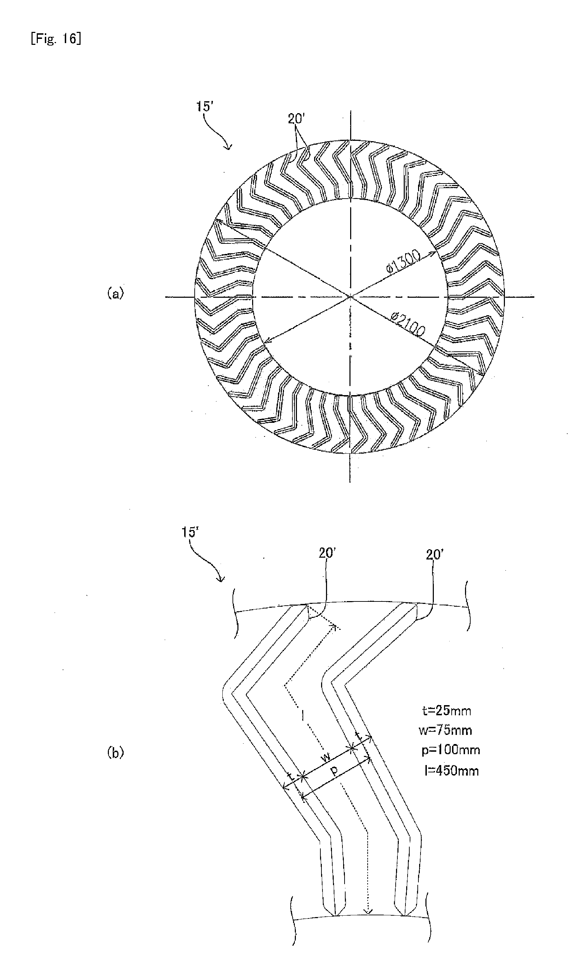

The silencer for a supercharger (cylindrical outer circumference suction silencer) in the comparative example, as shown in an overall view in Fig. 16 (a) and an enlarged view of a main part in Fig. 16 (b), has a silencing element 15' having a Z-shaped sound-absorbing splitter 20' arranged radially between the outside diameter and the inside diameter of the silencer.

However, the process air volume of a silencing element 15' is set at 44 $m^3$/m and, as shown in Fig. 16 (a), the outside diameter is set at 2100 mm to match an external form of a supercharger and also the inside diameter is set at 1300 mm to match the diameter of an inlet of the supercharger.

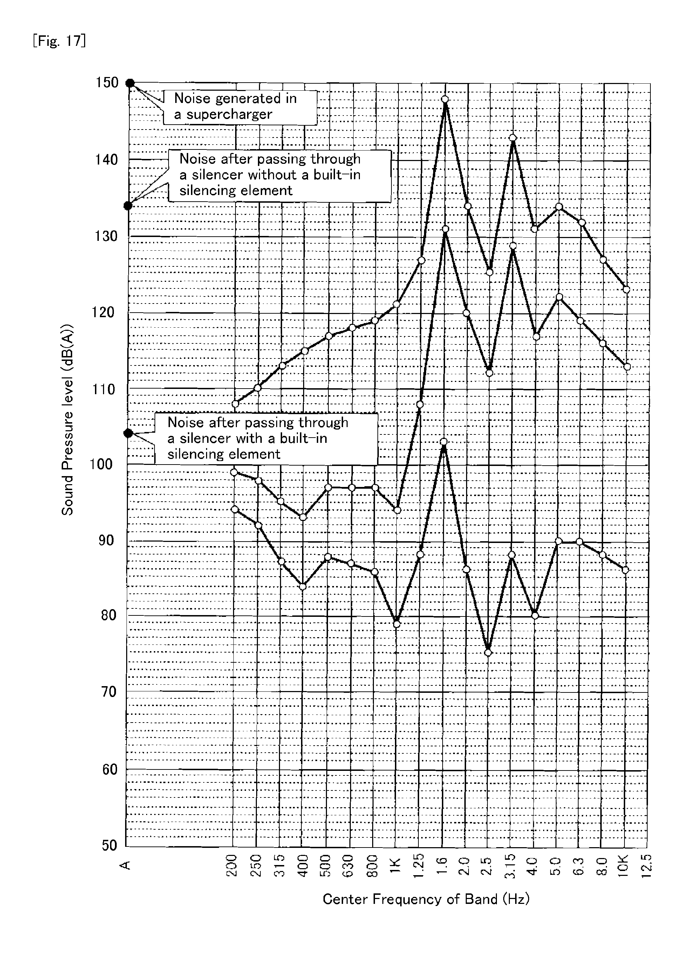

To reduce noise 150 dB (A) generated inside the supercharger after acoustic feeling correction (A characteristic) corresponding to the top line graph (A characteristic) in Fig. 17 to 105 dB (A) or less in the surrounding of the supercharger, an amount of silencing needs to be 45 dB (A) or more for the entire silencer for a supercharger. Of this amount of silencing, noise from the silencing element 15' needs to be reduced by 29 dB (A) or more. A noise level L after correction of A characteristic can be calculated by a formula of a sound pressure level for each frequency of A characteristic $L = 10 \log (10^{L1/10} + 10^{L2/10} + 10^{L3/10} + \cdots + 10^{Ln/10})$ (see "Machine Noise Handbook (Sangyo Tosho)" P. 8).

To silence 30 dB (A) in a high frequency domain mostly occupying noise generated with a basic frequency of 1650 Hz or higher, specifically 3300 Hz as the center, and to obtain an effective amount of silencing in a 400 mm interval between an outside diameter and an inside diameter, the silencer for a supercharger in the comparative example has a further specific structure shown below.

Specifically, as shown in Fig. 16 (a), the silencer for a supercharger in the comparative example has 48 sound-absorbing splitters 20' arranged at an equal interval in a circumferential direction. In addition, the sound-absorbing splitter 20' is formed in a "dogleg" shape from an outside diameter to an inside diameter, and further the tip (inner end) thereof is formed almost in a Z-shape bent to be parallel to a radial direction toward the center. In addition, as shown in 16 (b), the thickness t of a sound-absorbing splitter 20' is set at 25 mm, the flow path width is set at 75 mm, the array pitch p of a sound-absorbing splitter 20' is set at 100 mm, and the flow path (gross length) I is set at 450 mm.

In the silencer for a supercharger having this structure in the comparative example, the ratio of the flow path width w and the flow path I is I/w=450 (mm) /75 (mm) = 6.0 and the frequency that is silenced best is calculated by the following two methods.

<Calculation from the relationship between wavelength λ and flow path width w>

As a first calculation method, the frequency to be silenced best is calculated from the relationship between wavelength λ and a flow path width w as shown below.

Specifically, first, a flow path width w=75 mm is 3 times the thickness t=25 mm, and therefore, the following equation is established.

$$w=3t \qquad (1)$$

Then, when the equation (1) is applied, the following equation is established between an array pitch p and a flow path width w.

$$p=w+t$$
$$=w + (1/3)\,w$$
$$=(4/3)\,w \qquad (2)$$

Then, when the left side of the equation (2) is substituted in a condition p/λ =1 for an effective silencing of noise having a wavelength λ to eliminate p, the following equation is derived as a relational equation between the wavelength λ and the flow path width w.

$$w= (3/4)\ \lambda \qquad (3)$$

Then, the equation (3) is varied as in the following equation and w=75 mm is substituted to find a wavelength λ.

$$\lambda = (4/3)\,w$$
$$= (4/3)\ \times\ 75\ (mm)$$
$$= 100\ (mm) \qquad (4)$$

Then, a frequency f to be silenced best is found from the relationship between a sound speed v=340 m/s and a wavelength λ as in the following equation.

$$f= v/\lambda$$
$$= 340\ (m/s)/0.100\ (m)$$
$$= 3400\ (Hz) \qquad (5)$$

<Calculation from the relationship between wavelength λ and array pitch p>

Then, as a second calculation method, a frequency to be silenced best is calculated from the relationship between a wavelength λ and an array pitch p as shown below.

Specifically, first, the following equation is derived from the relational equation of wavelength λ and an array pitch p.

$$p= \lambda$$
$$\equiv \lambda = P$$
$$= 100\ (mm) \qquad (6)$$

Then, a frequency f to be silenced best is found from the relationship between a sound speed v=340m/s and a wavelength λ as in the following equation.

$$f=v/\lambda$$
$$= 340\ (m/s)/0.100\ (m)$$
$$= 3400\ (Hz) \qquad (7)$$

This calculation result of the equation (7) agrees with a calculation result from the relationship between wavelength λ and flow path width w mentioned above.

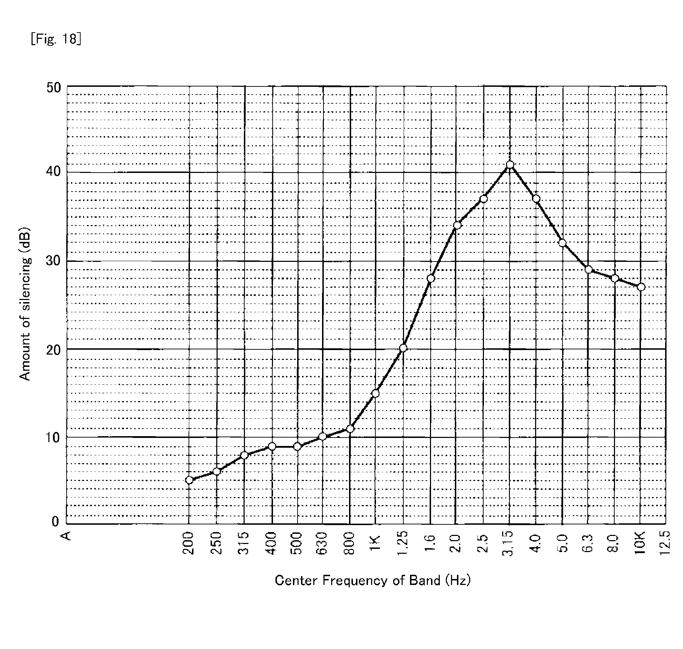

Then, for this silencer for a supercharger in the comparative example, the actual measured value of a silencing characteristic of an silencing element15' alone is as shown in Fig. 18, while the actual measured value of a noise characteristic (A characteristic) after passing through a silencer for a supercharger having a built-in silencing element 15' is as shown in the bottom line graph in Fig. 17. The middle line graph shown in Fig. 17 is the actual measured value of noise characteristic (A characteristic) after passing through a silencer for a supercharger not having a built-in silencing element 15.'

As shown in Fig. 18, in the silencing characteristic of the silencing element 15' alone, an amount of silencing peaks at 3150 Hz close to a designed value of 3400 Hz (the center of high frequency domain is 3300 Hz) and the graph has a slightly sharp chevron characteristic with an amount of silencing of 30 dB or more in a prescribed frequency range around 3150 Hz.

In addition, noise after correction of A characteristic corresponding to the bottom graph in Fig. 17 is 104 dB (A), equal to or less than targeted 105 dB (A).

However, in this silencer for a supercharger in the comparative example, as show in the bottom line graph in Fig. 17, a noise level at a basic frequency of 1650 Hz is higher by 15 dB or more than at frequencies (1250 Hz, 2000 Hz) around the basic frequency. This shows an unequal amount of silencing at the basic frequency and at overtone.

This noise characteristic does not show a balanced reduction of a noise level at the basic frequency of 1650 Hz and an overtone thereof of 3300 Hz.

[Example]

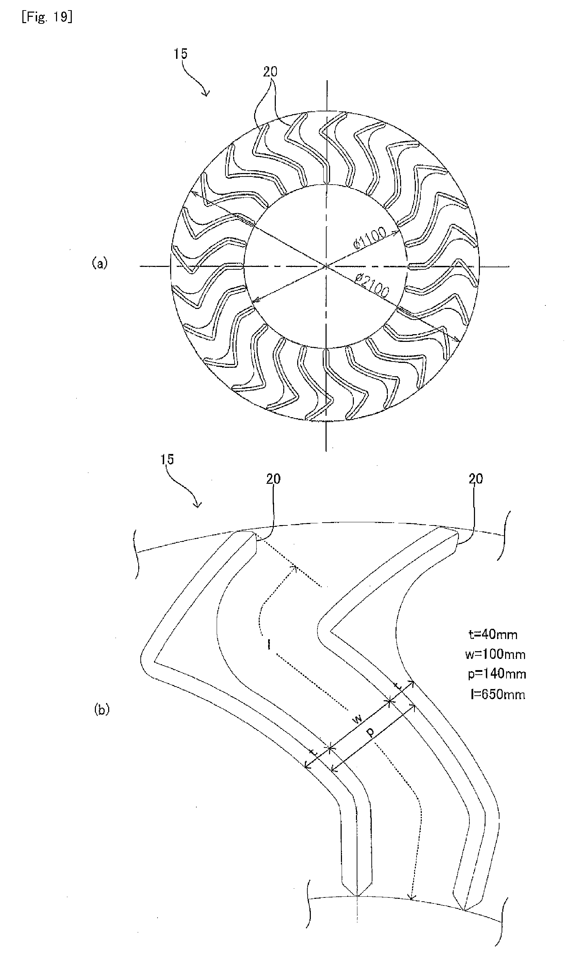

On the other hand, a silencer for a supercharger 1 in the Example, as shown in an overall view in Fig. 19 (a) and an enlarged view of a main part in Fig. 19 (b), is provided, between an outside diameter and an inside diameter of the silencer, with a silencing element 15 having nearly S-shaped sound-absorbing splitters 20 arranged concentrically, radially along a compound curve portion consisting of three involute curves.

However, the process air volume of the silencing element 15, as in the comparative example, is set at 44 m$^3$/m, and, as shown in Fig. 19 (a), an outside diameter is set at 2100 mm to match the external form of the supercharger. On the other hand, as shown in Fig. 19 (a), the inside diameter is set at 1100 mm slightly smaller than the inside diameter in the comparative example.

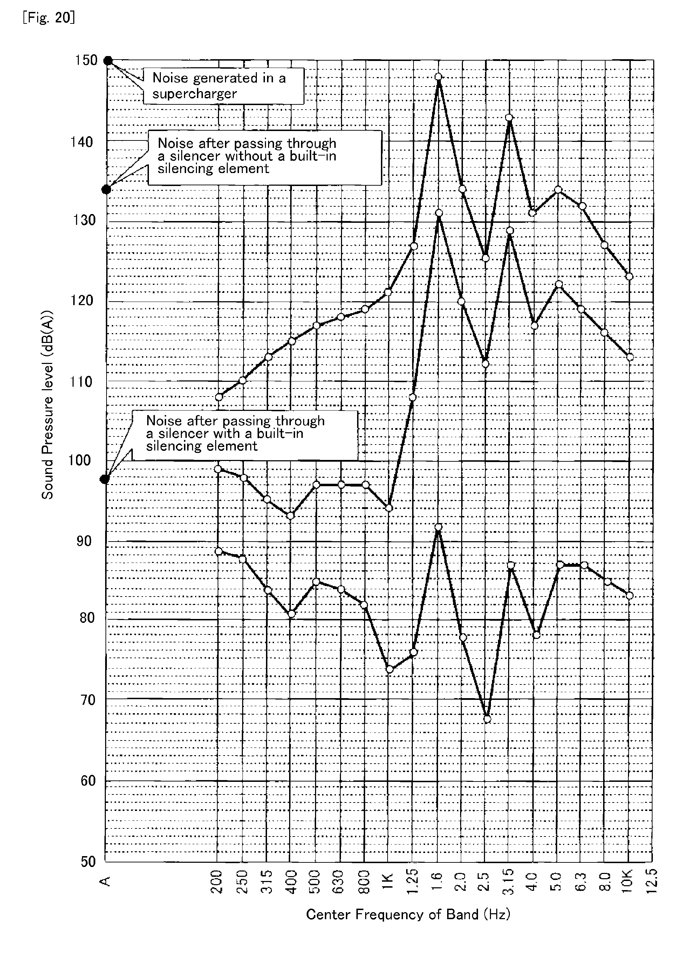

In the Example, to increase an amount of silencing more than the amount of silencing in the comparative example, noise of 150 dB (A) generated inside the supercharger after acoustic feeling correction (A characteristic) corresponding to the top graph in Fig. 20 (the same graph of the bottom graph in Fig. 17) is aimed to be reduced to less than 100 dB (A) at the surrounding of the supercharger.

Therefore, in the Example, an amount of silencing of 50 dB (A) or more is required for the entire silencer for a supercharger, and the noise from the silencing element 15 needs to be reduced by 34 dB (A) or more.

Specifically, an amount of silencing of the silencing element 15 (required amount of silencing is 34 dB (A)) in the Example needs to be increased by 5 dB (A) compared to an amount of silencing of the silencing element 15' (required amount of silencing 29 dB (A)) in the comparative example.

Therefore, in the Example, to efficiently reduce a noise level of both a basic frequency of 1650 Hz and an overtone thereof of 3300 Hz mostly occupying noise generated but not silenced in the comparative example, a peak frequency of silencing is aimed to be 2475 Hz (intermediate frequency between the basic frequency of 1650 Hz and the overtone of 3300 Hz) lower in the comparative example (3400 Hz).

To silence 35 dB (A) mainly at a peak frequency of silencing of 2475 Hz, and to obtain an effective amount of silencing in a 500 mm interval between an outside diameter and an inside diameter, the silencer for a supercharger in the Example is provided with a further specific structure.

Specifically, as shown in Fig. 19 (a), the silencer for a supercharger in the Example has 24 sound-absorbing splitters 20 using an involute curve arranged at a constant interval in a circumferential direction. In addition, as shown in Fig. 19 (b), the thickness t of the sound-absorbing splitter 20 is set at 40 mm, the flow path width w is set at 100 mm, the array pitch p is set at 140 m, and the flow path I is set at 650 mm.

In the silencer for a supercharger having this structure in the Example, the ratio of the flow path width w and the flow path I is 1/w=650 (mm) /100 (mm) = 6.5, and, like the comparative example, the frequency that is silenced best is calculated by the following two methods.

<Calculation from the relationship between wavelength $\lambda$ and flow path width w>

As a first calculation method, the frequency to be silenced best is calculated from the relationship between wavelength $\lambda$ and a flow path width w as shown below.

Specifically, first, a flow path width w=100 mm is 2.5 times the thickness t=40 mm, and therefore, the following equation is established.

$$w=2.5t \qquad (8)$$

Then, when the equation (8) is applied, the following equation is established between an array pitch p and a flow path width w.

$$p=w+t$$
$$=w + (2/5)\,w$$
$$= (7/5)\,w \qquad (9)$$

Then, when the right side of the equation (9) is substituted in a condition p/$\lambda$ =1 for an effective silencing of noise having a wavelength $\lambda$ to eliminate p, the following equation is derived as a relational equation between the wavelength $\lambda$ and the flow path width w.

$$w=(5/7)\,\lambda \qquad (10)$$

Then, the equation (10) is varied as in the following equation and w=100 mm is substituted to find a wavelength $\lambda$.

$$\lambda = (7/5)\,w$$
$$= (7/5) \times 100 \ (mm)$$
$$= 140 \ (mm) \qquad (11)$$

Then, a frequency f to be silenced best is found from the relationship between a sound speed v=340 m/s and a wavelength $\lambda$ as in the following equation.

$$f=v/\lambda$$
$$=340\ (\mathrm{m/s})/0.140\ (\mathrm{m})$$
$$=2429\ (\mathrm{Hz})\qquad(12)$$

<Calculation from the relationship between wavelength $\lambda$ and array pitch p>

Then, as a second calculation method, a frequency to be silenced best is calculated from the relationship between a wavelength $\lambda$ and an array pitch p as shown below.

Specifically, first, the following equation is derived from the relational equation of wavelength $\lambda$ and an array pitch p.

$$p=\lambda$$
$$\equiv \lambda =P$$
$$=140\ (\mathrm{mm})\qquad(13)$$

Then, a frequency f to be silenced best is found from the relationship between a sound speed v=340m/s and a wavelength $\lambda$ as in the following equation.

$$f=v/\lambda$$
$$=340\ (\mathrm{m/s})/0.140\ (\mathrm{m})$$
$$=2429\ (\mathrm{Hz})\qquad(14)$$

This calculation result of the equation (14) agrees with a calculation result from the relationship between wavelength $\lambda$ and flow path width w mentioned above.

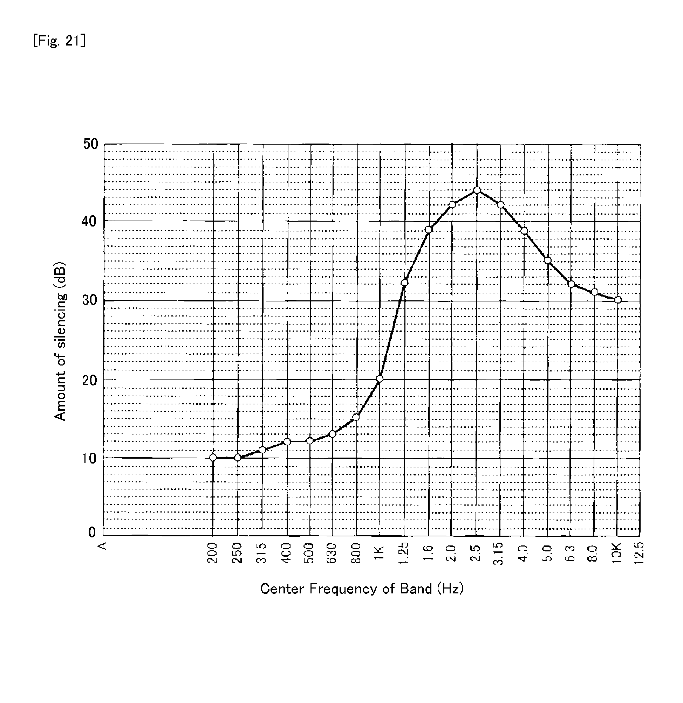

For this silencer for a supercharger in the Example, the actual measured value of a silencing characteristic of an silencing element 15 alone is as shown in Fig. 21, while the actual measured value of a noise characteristic (A characteristic) after passing through a silencer for a supercharger having a built-in silencing element 15 is as shown in the bottom line graph in Fig. 20. The middle line graph shown in Fig. 20 is the actual measured value of noise characteristic (A characteristic) after passing through a silencer for a supercharger 1 not having a built-in silencing element 15 and this graph is the same as the middle graph in Fig. 17.

As shown in Fig. 21, the silencing characteristic of the silencing element 15 alone is a slightly shallow chevron characteristic in which an amount of silencing peaks at 2500 Hz close to a designed value of a peak frequency of 2475 Hz (2429 Hz, a calculated value by a flow path width w and an array pitch p) and an amount of silencing is 35 dB or more in a prescribed frequency range around 2500 Hz. As seen in the same, the frequency range showing an amount of silencing of 35 dB or more includes a basic frequency of a supercharger (noise) of 1650 Hz and an overtone of 3300 Hz.

In addition, noise after correction of A characteristic corresponding to the bottom graph in 20 is 98 dB (A), equal to or less than targeted 100 dB (A).

Furthermore, as shown in Fig. 21, according to the Example, by designing a peak frequency of silencing at the midpoint between the basic frequency (1650 Hz) and the overtone (3300 Hz), an amount of silencing at 1600 Hz, close to the basic frequency, is 39 dB and an amount of silencing at 3150 Hz, close to the overtone, is 42 dB and almost the same amount of silencing is obtained. This shows that a problem of an unequal amount of silencing between a basic frequency and an overtone is improved compared to the comparative example (an amount of silencing at 1600 Hz is 28 dB and an amount of silencing at 3150 Hz is 41 dB) in Fig. 18 in which a peak frequency of silencing is shifted to an overtone.

The effect of this Example is further obvious when a noise characteristic (the bottom line graph in Fig. 20) after noise has passed through a silencer for a supercharger 1 having a built-in silencing element 15 is compared to the noise characteristic in the comparative example (the bottom graph in Fig. 17).

Specifically, as shown in the bottom graph in Fig. 17, in the comparative example, noise at 1600 Hz, close to the basic frequency, is 103 dB and noise at 3150 Hz, close to the overtone, is 88 dB and there is a difference of as much as 15 dB therebetween. In addition, in the comparative example, since noise close to the basic frequency (1600 Hz) of 103 dB is slightly different by as little as 1 dB from noise of 104 dB (A) after correction of A characteristic, noise at the basic frequency has a large influence on the entire noise.

On the other hand, as shown in the bottom line graph in Fig. 20, in the Example, noise at 1600 Hz, close to the basic frequency, is 92 dB and noise at 3150 Hz, close to the overtone, is 87 dB and the difference therebetween is reduced to 5 dB. In addition, in the Example, since noise close to the basic frequency (1600 Hz) of 92 dB is different by 6 dB from noise after correction of A characteristic of 98 dB (A), the influence of noise at the basic frequency on the entire noise is mitigated compared to the comparative example.

Therefore, according to the silencer for a supercharger 1 in the Example, unlike the silence for a supercharger in the comparative example, noise at both the basic frequency of 1650 Hz and the overtone of 3300 Hz is silenced to almost the same balanced amount.

In addition, according to the silencer for a supercharger in the Example, compared to the silence for a supercharge in the comparative example, the number of sound-absorbing splitters 20 in the silencing element 15 can be reduced (halved) from 48 (comparative example) to 24 (Example), a significant cost reduction is possible even allowing for a thicker (40 mm) sound-absorbing splitter 20 than the sound-absorbing splitter in the comparative example (25 mm) and a longer flow path 1 (650 mm) than the flow path in the comparative example (450 mm).

The present invention is not limited to the three embodiments mentioned above and a variety of modification can be made as necessary.

For example, the second embodiment and the third embodiment may be combined.

[Reference Signs List]

1 Silencer for a supercharger
3 Compressor
4 Air inlet
19 Flow path
20 Sound-absorbing splitter

**Claims**

1. A silencer for a supercharger attached to an air inlet through which air is suctioned by a compressor provided in a supercharger and silencing noise generated by the compressor at the time of suctioning air, comprising;

a plurality of plate-like sound-absorbing splitters being arranged along the inner circumference of the air inlet in a circumferential direction having a prescribed central axis as the center with each gap provided in a radial direction, to suction the air with each of the gaps as a flow path from outwardly to inwardly in the radial direction and to absorb the noise emitted from inwardly to outwardly in the radial direction against the air flow in the plurality of sound-absorbing splitters,

wherein any of the sound-absorbing splitters and another sound-absorbing splitter adjacent thereto in the circumferential direction are formed in a shape along a site having the same distance interval from an origin in each of a plurality of involute curves having different origins having as the basis thereof a fixed circle having the same center and the same radius as the central axis,

wherein a flow path width being the dimension in the normal direction of the involute curve between any of the sound-absorbing splitters and another sound-absorbing splitter adjacent thereto in the circumferential direction in the flow path is set to a prescribed constant value suitable for the wavelength of the noise to be silenced.

2. The silencer for a supercharger according to claim 1, wherein any of the sound-absorbing splitters and another sound-absorbing splitter adjacent thereto in the circumferential direction are formed in a shape on the basis of the pair of involute curves, as the plurality of involute curves, applicable to any of the plurality of patterns of the pair of involute curves having the same radius and/or having different intervals from the different origins and that since all of the plurality of patterns are allocated to a shape of any pair of sound-absorbing splitters adjacent to each other of the plurality of sound-absorbing splitters, a flow path having the prescribed flow path width corresponding to each of the plurality of patterns is selectively arranged in accordance with a position in the circumferential direction.

3. The silencer for a supercharger according to any of the preceding claims 1 and 2, wherein any of the sound-absorbing splitters and another sound-absorbing splitter adjacent thereto in the circumferential direction are each formed in a shaped along a compound curve portion linking some portions of a plurality of involute curves in a normal or reverse involute direction as the basis thereof a fixed circle having the same center.

4. The silencer for a supercharger according to any of the preceding claims 1 to 3, wherein the constant value is 1/2 of the wavelength of the noise to be silenced.

5. The silencer for a supercharger according to any of the preceding claims 1 to 4, wherein an array pitch of the sound-absorbing splitter is set at a value suitable for the wavelength of the noise to be silenced.

6. The silencer for a supercharger according to claim 5, wherein the array pitch has the same dimension as the wavelength of the noise to be silenced.

7. The silencer for a supercharger according to any of the preceding claims 1 to 6, wherein the wavelength of the noise to be silenced is the wavelength corresponding to a basic frequency of the noise.

8. A supercharger having a silencer for a supercharger at a compressor, wherein a plurality of sound-absorbing splitters are arranged along the inner circumference of an air inlet radially with each interval set in a circumferential direction having a prescribed central axis as the center, have an origin having as the basis therefor a fixed circle having the same center as the central axis, and are formed along an involute curve, and wherein a flow path width formed by sound-absorbing splitters adjacent in the circumferential direction is set at a prescribed width be suitable for the wavelength of the noise to be silenced.

[Fig. 1]

[Fig. 2]

[Fig. 3]

[Fig. 4]

EP 2 933 470 A1

[Fig. 5]

I

P

P

W'
W'
W'
W'
W'
W'
W'
W'
W'

C

[Fig. 6]

20

21    22

23

24

24

[Fig. 7]

20

26    22

16

[Fig. 8]

[Fig. 9]

[Fig. 10]

[Fig. 11]

[Fig. 12]

15

19 20

(a)

Enlargement

(b)

20

Straight line

[Fig. 13]

[Fig. 14]

[Fig. 15]

[Fig. 16]

(a)

15'
20'
⌀1300
⌀2100

(b)

15'
20'
20'

t=25mm
w=75mm
p=100mm
l=450mm

EP 2 933 470 A1

[Fig. 17]

[Fig. 18]

Center Frequency of Band (Hz)

[Fig. 19]

(a)

(b)

t=40mm
w=100mm
p=140mm
l=650mm

[Fig. 20]

Noise generated in a supercharger

Noise after passing through a silencer without a built-in silencing element

Noise after passing through a silencer with a built-in silencing element

Sound Pressure level (dB(A))

Center Frequency of Band (Hz)

[Fig. 21]

[Fig. 22]

**EP 2 933 470 A1**

<table>
<tr><td colspan="2"><strong>INTERNATIONAL SEARCH REPORT</strong></td><td>International application No.<br>PCT/JP2013/083425</td></tr>
</table>

A. CLASSIFICATION OF SUBJECT MATTER
*F02M35/12(2006.01)i, F02B37/00(2006.01)i*

According to International Patent Classification (IPC) or to both national classification and IPC

B. FIELDS SEARCHED

Minimum documentation searched (classification system followed by classification symbols)
F02M35/12, F02B37/00

Documentation searched other than minimum documentation to the extent that such documents are included in the fields searched
Jitsuyo Shinan Koho        1922–1996    Jitsuyo Shinan Toroku Koho    1996–2014
Kokai Jitsuyo Shinan Koho   1971–2014    Toroku Jitsuyo Shinan Koho    1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-542602 A  (Siemens AG.),<br>27 November 2008 (27.11.2008),<br>paragraphs [0016] to [0030]; fig. 1 to 4<br>& US 2009/0104024 A1    & GB 2426555 A<br>& WO 2006/128827 A1    & CN 101052784 A<br>& KR 10-2008-0014724 A | 1-8 |
| Y | JP 5-195893 A  (Tosho Engineering Kabushiki<br>Kaisha),<br>03 August 1993 (03.08.1993),<br>paragraphs [0002], [0005]; fig. 1 to 6<br>(Family: none) | 1-8 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 February, 2014 (19.02.14) | Date of mailing of the international search report<br>04 March, 2014 (04.03.14) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 933 470 A1**

**INTERNATIONAL SEARCH REPORT**

International application No.

PCT/JP2013/083425

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2006-194161 A  (Mitsubishi Heavy Industries, Ltd.), 27 July 2006 (27.07.2006), entire text; all drawings (Family: none) | 1-8 |
| A | JP 2876000 B1  (Mitsubishi Aluminum Co., Ltd.), 31 March 1999 (31.03.1999), entire text; all drawings (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004360547 A

- JP 2002004964 A

**Non-patent literature cited in the description**

- Attenuation Characteristic of Sound-absorbing Duct. **TERUO OBATA ; KEN HIRATA ; ITSUO ONISHI ; NISHIWAKI JIN-ICHI.** The Journal of the Acoustical Society of Japan. Institute of Industrial Science, 1975, vol. 31